(19) **Europäisches Patentamt**
**European Patent Office**
**Office européen des brevets**

(11) **EP 4 279 787 A1**

(12) **EUROPEAN PATENT APPLICATION**
published in accordance with Art. 153(4) EPC

(43) Date of publication:
**22.11.2023 Bulletin 2023/47**

(21) Application number: **21919569.0**

(22) Date of filing: **24.11.2021**

(51) International Patent Classification (IPC):
**F16L 33/22** (2006.01)

(52) Cooperative Patent Classification (CPC):
**F16L 33/22**

(86) International application number:
**PCT/JP2021/042975**

(87) International publication number:
**WO 2022/153678 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.01.2021 JP 2021003080**

(71) Applicant: **Nitta Corporation
Osaka-shi, Osaka 556-0022 (JP)**

(72) Inventors:
• **MAGUCHI, Yuta
Nabari-shi, Mie 518-0494 (JP)**
• **NISHIWAKI, Shunichi
Nabari-shi, Mie 518-0494 (JP)**

(74) Representative: **Viering, Jentschura & Partner
mbB
Patent- und Rechtsanwälte
Am Brauhaus 8
01099 Dresden (DE)**

(54) **HOSE COUPLING**

(57) A hose coupling 1 includes a nipple 3 in which a tubular part for inserting a hose 2 externally, an annular groove part for inserting a tip of the hose 2, and an attachment part for a separate part are formed in that order along the hose insertion direction A; a nut 4 having a screw part that is screwed onto the outer circumferential surface of the nipple 3 in a state that the tip of the hose 2 is inserted into the annular groove part, and a thickened part that is continuously formed from the screw part and located on the outer circumferential surface of the tubular part; and a sleeve 5 interposed between the tubular part and the thickened part, wherein the sleeve 5 has a thickness reduced part 10 on the inner circumferential surface thereof.

FIG. 1

EP 4 279 787 A1

**Description**

TECHNICAL FIELD

The present invention relates to a hose coupling used for piping for circulating a fluorine-based inert refrigerant and the like for the purpose of cooling.

BACKGROUND

In general, hoses used for piping for circulating inert refrigerants and the like are relatively soft. As couplings used for such hoses, those having a mechanism in which, in a state that a tip of the hose is attached to a body of a nipple, the hose is compressed by inserting a nut externally onto the outer circumferential surface of the hose through a sleeve, and tightening the nut to reduce the diameter of the sleeve are known (Patent Document 1).

In such a conventional coupling, when the hose is compressed, a tightening torque of the nut increases due to a high compressive stress of the hose, resulting in a poor tightening workability of the nut. If the hose is designed to have a low compression rate to reduce the tightening torque of the nut, a pressure resistance of the hose will be reduced. Here, the compression rate of the hose indicates how much the hose after coupling is compressed relative to the hose before coupling.

PRIOR ART DOCUMENT

PATENT DOCUMENT

Patent Document 1: Japanese Utility Model Publication No. H6-27916.

SUMMARY

PROBLEMS TO BE SOLVED BY THE INVENTION

A main object of the present invention is to provide a hose coupling in which a tightening torque of a nut is reduced while maintaining a pressure resistance performance.

MEANS OF SOLVING THE PROBLEMS

A hose coupling to solve the above problem includes a nipple formed of a tubular body in which a tubular part for inserting a hose externally, an annular groove part for inserting a tip of the hose, and an attachment part for a separate part are formed in that order along the hose insertion direction; a nut formed of an annular body through which the hose is inserted, having a screw part that is screwed onto the outer circumferential surface of the nipple in a state that the tip of the hose is inserted into the annular groove part, and a thickened part that is continuously formed from the screw part and located on the outer circumferential surface of the tubular part; and a sleeve interposed between the tubular part and the thickened part. The sleeve has a thickness reduced part on the inner circumferential surface thereof.

EFFECTS OF THE INVENTION

According to the present invention, a tightening torque of the nut can be reduced while maintaining the pressure resistance performance of the hose by providing the thickness reduced part on the inner circumferential surface of the sleeve.

BRIEF DESCRIPTION OF THE DRAWINGS

FIG. 1 is a partially broken side view showing a state that a hose is fixed to a coupling according to one embodiment of the present invention.
FIG. 2 is a partially broken side view showing a nipple that constitutes the coupling shown in FIG. 1.
FIG. 3 is a partially broken side view showing a nut that constitutes the coupling shown in FIG. 1.
FIG. 4 is a partially broken side view showing a sleeve that constitutes the coupling shown in FIG. 1.
FIG. 5 is a partially broken side view showing a sleeve in which no slits is formed in the sleeve shown in FIG. 4.

FIG. 6 is a partially broken side view showing a coupling in which a sleeve having no thickness reduced part is used, which is a comparative example of the present invention.

## EMBODIMENTS FOR CARRYING OUT THE INVENTION

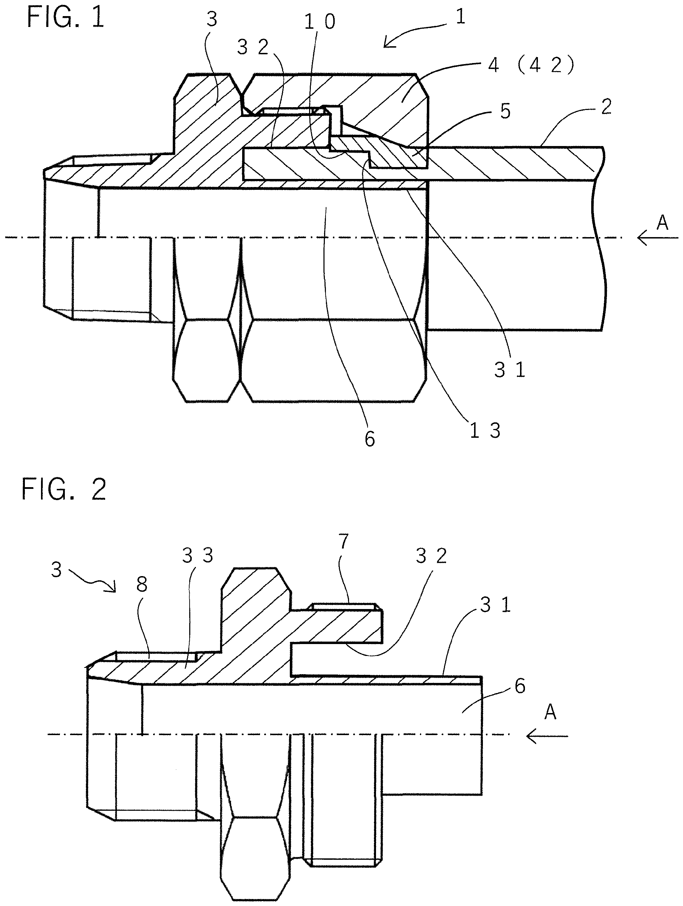

A hose coupling according to one embodiment of the present invention will be described below with reference to the drawings. FIG. 1 shows a state that a hose 2 is fixed to a coupling 1 according to one embodiment of the invention.

As shown in FIG. 1, the coupling 1 includes a nipple 3, a nut 4 and a sleeve 5. The hose 2 is not particularly limited as long as it is used for transporting, for example, fluorine-based refrigerants, as well as cooling water, pure water, or other fluids. An operating temperature range of the hose 2 may be, for example, 5°C to 40°C. As such a hose 2, for example, a hose in which an inner layer, an intermediate layer, a reinforcing layer and an outer layer are laminated in this order can be used, and a single-layer resin tube or the like can also be used. For example, a polyolefin-based resin can be used for the inner layer, the intermediate layer and the outer layer, and a synthetic fiber braid such as a polyethylene terephthalate (PET) resin can be used for the reinforcing layer.

As shown in FIG. 2, the nipple 3 constituting the coupling 1 is formed of a tubular body having a through hole 6 through which liquid such as refrigerant or gas flows, and along the hose insertion direction (the direction indicated by the arrow A), a tubular part 31 for inserting the hose 2 externally, an annular groove part 32 for inserting the tip of the hose 2, and an attachment part 33 for a separate member which is not shown are formed in this order. The nipple 3 is made of metal or synthetic resin.

A part of the tubular part 31 constitutes the annular groove part 32, but in the present invention, the part protruding from the annular groove part 32 is set to be the tubular part 31. A screw groove 7 for screwing with the nut 4 is formed on the outer circumferential surface of the annular groove part 32. A screw groove 8 for screwing with the separate member is also formed on the outer circumferential surface of the attachment part 33 for the separate member.

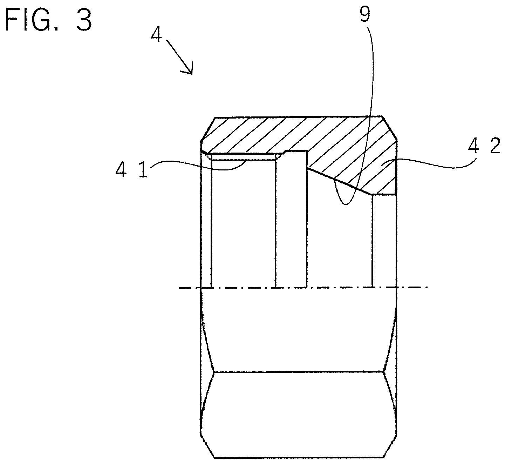

As shown in FIG. 3, the nut 4 is formed of an annular body through which the hose 2 is inserted, and a screw part 41 is formed on the inner circumferential surface, and is screwed with the screw part 7 formed on the outer circumferential surface of the nipple 3 in a state that the tip of the hose 2 is inserted into the annular groove part 32 of the nipple 3.

Adjacent to the screw part 41, a thickened part 42 is formed integrally with the screw part 41. The thickened part 42 is located on the outer circumferential surface of the tubular part 31 of the nipple 3 in a state that the tip of the hose 2 is inserted into the annular groove part 32 of the nipple 3 (refer to FIG. 1). The thickened part 42 has an inclined surface 9 whose inner diameter increases along the insertion direction of the hose 2 on the inner circumferential surface, and its inclination angle is preferably 20° to 25° based on the insertion direction of the hose 2. The nut 4 is made of metal or a synthetic resin.

The sleeve 5 is arranged so as to be interposed between the tubular part 31 of the nipple 3 and the thickened part 42 of the nut 4, as shown in FIG 1. The material of the sleeve 5 is preferably a resin such as polyacetal (POM), polybutylene terephthalate (PBT), polypropylene (PP), polyphenylene sulfide (PPS) or the like. The hardness of the sleeve 5 is preferably HRM 70 to 90 in terms of Rockwell hardness (JIS K7202-2) so as not to be excessively plastically deformed when the nut 4 is tightened.

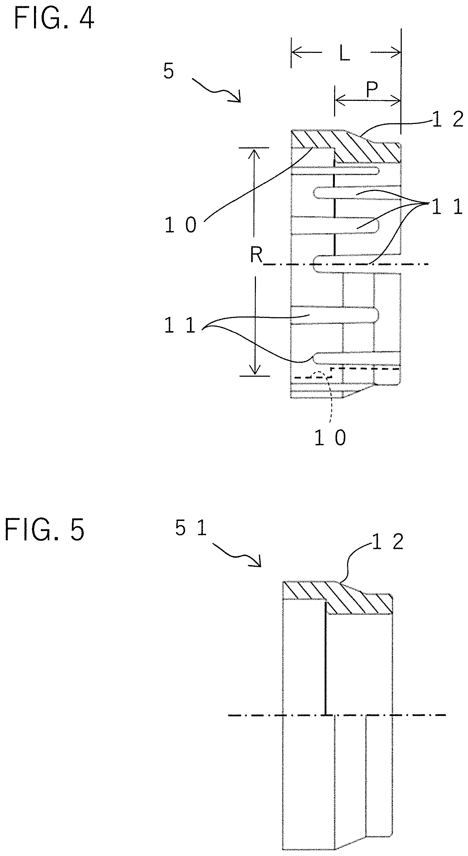

As shown in FIG. 4, the sleeve 5 is an annular body and has a plurality of slits 11 for diameter reduction formed in the circumferential direction. This allows the slits 11 to deform and reduce in diameter to press against the hose 2 when tightened by the nut 4, thereby fixing and holding the hose 2. The slits 11 are alternately formed in the openings of both sides over the entire circumference. The number of slits 11 may be 6 or more and 10 or less so that the diameter is easily reduced and the shape after the diameter reduction is as close to a perfect circle as possible to provide a sufficient sealing performance.

Moreover, the width and the length of each slit 11 may be set in consideration of the ease of the diameter reduction of the sleeve 5, the holding force of the hose 2, and the like.

The outer diameter of the tip of the sleeve 5 on the small diameter side is sized so that the sleeve 5 contacts the inclined surface 9 of the nut 4 when the nut 4 starts to be tightened, and the diameter of the sleeve 5 is reduced along the inclined surface 9 as the tightening proceeds.

An occupancy ratio, which indicates a ratio of the volume of the sleeve 5 in which the plurality of slits 11 are formed as shown in FIG. 4 to the volume of the sleeve 51 in which the slits 11 are not formed shown in FIG. 5 is preferably 50% or more and 70% or less, thereby easily reducing the diameter of the sleeve 5.

Further, the sleeve 5 has an inclined surface 12 corresponding to the inclined surface 9 formed on the thickened part 42 of the nut 4 on the outer circumferential surface. That is, the inclined surface 12 of the sleeve 5 preferably has the same inclination angle as the inclined surface 9 of the nut 4 with respect to the insertion direction of the hose 2. Thereby, the positional relationship between the sleeve 5 and the nut 4 can be fixed.

A thickness reduced part 10 (notch part) is formed on the inner circumferential surface of the sleeve 5. The thickness reduced part 10 is formed, for example, by notching the inner circumferential surface of the sleeve 5 on the side of the annular groove part 32 by cutting or the like. As a result of forming the thickness reduced part 10, it is possible to secure a space for releasing the compressed hose 2 when tightened by the nut 4, whereby the compressive stress of the hose 2 can be reduced. In addition, although the thickness reduced part 10 is formed over the entire circumference of the sleeve 5 in FIG. 4, the thickness reduced part 10 may be formed in a part of the circumferential direction. An inner diameter R of the thickness reduced part 10 in reducing the diameter is preferably equal to or larger than the outer diameter of the hose. Moreover, when the thickness reduced parts 10 are formed in a part of the circumferential direction, the thickness reduced parts 10 may be arranged around the sleeve 5 at equal intervals.

A region from the thickness reduced part 10 to the other end of the sleeve 5 serves as a compressed part P for compressing the hose 2. By forming the thickness reduced part 10, the length of the compressed part P is shortened, so the compressed area of the hose 2 is reduced. As a result, the stress required for compressing the hose 2 can be reduced, and the tightening torque of the nut 4 can be reduced while maintaining the pressure resistance performance of the hose. Specifically, in order to reduce the nut tightening torque while ensuring a burst pressure of 4 MPa or more, the compressed part P may be approximately 40% or more and 70% or less of the total length L of the sleeve 5.

As shown in FIG. 1, a stepped part 13 is formed by forming the thickness reduced part 10, and since the hose 2 is locked to the stepped part 13, there is also an advantage that the hose 2 can be prevented from coming off.

Next, a performance comparison was made between the case where the thickness reduced part 10 was formed in the sleeve 5 and the case where it was not formed in the sleeve 5, and the results are described below.

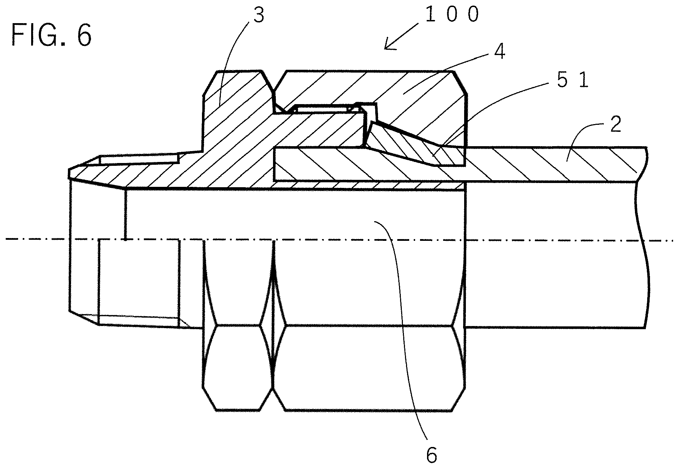

FIG. 6 shows a hose coupling 100 using a sleeve 51 in which the thickness reduced parts 10 are not formed. This hose coupling 100 is the same as the hose coupling 1 shown in FIG. 1 except that the sleeve 51 is used, so the same symbols are used for the same members as in FIG. 1 and the explanations are omitted.

The nipple 3 and the nut 4 are made of metal, and the sleeves 5 and 51 are made of resin. The tested hose 2 has an inner diameter of 15.0 mm and an outer diameter of 22.0 mm, and an inner layer, an intermediate layer, a fiber reinforcing layer and an outer layer are laminated in this order. The inner layer, the intermediate layer and the outer layer are made of a polyolefin-based resin, and the fiber reinforcing layer is made of PET fiber.

(1) Hose compression rate

The hose compression rate was obtained from the following formula.

$$\text{Formula: Hose compression rate (\%)} = \{(T_0 - T_1)/T_0\} \times 100$$

In the formula, $T_0$ represents the thicknesses of the hoses before the attachment to the couplings 1 and 100, and $T_1$ represents the thicknesses of the hoses after the attachment to the couplings 1 and 100, respectively.

(2) Nut tightening torque test

The tightening torque was measured when the hoses 2 were connected to the couplings 1 and 100, respectively, and the nuts 4 were tightened.

(3) Burst pressure test

With the hoses 2 connected to the couplings 1 and 100, respectively, a water pressure was applied to the hoses 2, and the pressure at which the hoses 2 break was confirmed. Then, when the burst pressure of the hose 2 was 4 MPa or more, it was evaluated as passed "O".

The test results are shown in Table 1.

[Table 1]

|  | Hose compression rate (%) | Nut tightening torque test (N · m) | Burst pressure test (standard : 4 MPa or more) |
|---|---|---|---|
| A coupling 1 using a sleeve 5 in which a thickness reduced part 10 is formed | 50 | 40 | ○ |
| A coupling 100 using a sleeve 51 in which a thickness reduced part 10 is not formed | 50 | 55 | ○ |

As is clear from Table 1, the coupling 1 according to the present invention has no significant difference in the hose compression rate and the burst pressure test, but the nut tightening torque is greatly reduced, compared to the coupling 100 of the comparative example.

Although the embodiments of the present invention have been described above, the hose coupling of the present invention is not limited to the above embodiments, and various modifications and improvements can be made within the scope of the present invention. Description of the Reference Numeral

1, 100 Coupling
2 Hose
3 Nipple

31 tubular part
32 annular groove part
33 attachment part for a separate member

4 Nut

41 screw part
42 thickened part

5 Sleeve
6 Through hole
7, 8 Screw part
9 Inclined surface
10 Thickness reduced part
11 Slit
12 Inclined surface

A Hose insertion direction
P Compressed part
R Inner diameter of thickness reduced part
L Total length

## Claims

1. A hose coupling comprising

   a nipple formed of a tubular body in which a tubular part for inserting a hose externally, an annular groove part for inserting a tip of the hose, and an attachment part for a separate part are formed in that order along the hose insertion direction,
   a nut formed of an annular body through which the hose is inserted, having a screw part that is screwed onto the outer circumferential surface of the nipple in a state in which the tip of the hose is inserted into the annular groove part, and a thickened part that is continuously formed from the screw part and located on the outer circumferential surface of the tubular part, and
   a sleeve interposed between the tubular part and the thickened part, and
   wherein the sleeve has a thickness reduced part on the inner circumferential surface thereof.

2. The hose coupling according to Claim 1, wherein the thickened part has an inclined surface whose inner diameter increases along the insertion direction of the hose on the inner circumferential surface, and the sleeve has an inclined surface corresponding to the inclined surface of the thickened part on the outer circumferential surface.

3. The hose coupling according to Claim 1 or 2, wherein the thickness reduced part is formed on the inner circumferential surface of the sleeve on the side of the annular groove part.

4. The hose coupling according to any one of Claims 1 to 3, wherein the thickness reduced part is formed over the entire circumference or in a part of the circumferential direction of the sleeve.

5. The hose coupling according to any one of Claims 1 to 4, wherein the sleeve has a plurality of slits for diameter reduction formed in the circumferential direction.

6. The hose coupling according to any one of Claims 1 to 6, wherein the sleeve is made of resin.

7. The hose coupling according to Claim 6, wherein a hardness of the sleeve is HRM 70 to 90.

FIG. 1

FIG. 2

FIG. 3

FIG. 4

FIG. 5

FIG. 6

**EP 4 279 787 A1**

## INTERNATIONAL SEARCH REPORT

| | International application No. |
|---|---|
| | **PCT/JP2021/042975** |

### A. CLASSIFICATION OF SUBJECT MATTER

*F16L 33/22*(2006.01)i
FI: F16L33/22

According to International Patent Classification (IPC) or to both national classification and IPC

### B. FIELDS SEARCHED

Minimum documentation searched (classification system followed by classification symbols)

F16L33/22; F16L33/207

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2010-84880 A (TABUCHI CORP.) 15 April 2010 (2010-04-15) paragraphs [0019]-[0025], fig. 1 | 1-7 |
| Y | JP 2013-40645 A (TOYOX KK) 28 February 2013 (2013-02-28) paragraphs [0014]-[0033], fig. 1, 2 | 1-7 |
| A | JP 3020864 U (OSAKA GAS CO., LTD.) 06 February 1996 (1996-02-06) entire text, all drawings | 1-7 |
| A | JP 2008-224013 A (HAKKO CORP.) 25 September 2008 (2008-09-25) entire text, all drawings | 1-7 |
| A | JP 2020-133640 A (TOYOX KK) 31 August 2020 (2020-08-31) fig. 2 | 1-7 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 January 2022** | **01 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/042975**

| Patent document cited in search report | | | Publication date (day/month/year) | Patent family member(s) | Publication date (day/month/year) |
|---|---|---|---|---|---|
| JP | 2010-84880 | A | 15 April 2010 | (Family: none) | |
| JP | 2013-40645 | A | 28 February 2013 | (Family: none) | |
| JP | 3020864 | U | 06 February 1996 | (Family: none) | |
| JP | 2008-224013 | A | 25 September 2008 | (Family: none) | |
| JP | 2020-133640 | A | 31 August 2020 | WO 2020/166516 A1 | |

Form PCT/ISA/210 (patent family annex) (January 2015)

**EP 4 279 787 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H627916 U